# EUROPÄISCHE PATENTSCHRIFT

(11) **EP 2 799 196 B1**
(45) Veröffentlichungstag und Bekanntmachung des Hinweises auf die Patenterteilung: **06.03.2019**
(21) Anmeldenummer: 14166390.6
(22) Anmeldetag: 29.04.2014
(51) Int. Cl.: B26D 7/22, B26D 5/00, G05B 19/409, G06F 3/0482, G06F 3/0485, G06F 3/0488, G06F 3/0484

(54) **Lebensmittelaufschneidevorrichtung mit einer Anzeige mit adaptivem Übersichtsfeld und Bedienfeld**
Slicer with a display with adaptive field of view and control panel
Trancheuse dotée d'un affichage ayant un champ de lisibilité et champ de commande adaptif

(30) Priorität: 30.04.2013 DE 102013007495
(43) Veröffentlichungstag der Anmeldung: 05.11.2014
(73) Patentinhaber: Weber Maschinenbau GmbH Breidenbach, 35236 Breidenbach (DE)
(72) Erfinder: Müller, Michael, 35685 Dillenburg (DE)
(74) Vertreter: Grünecker Patent- und Rechtsanwälte PartG mbB

(56) Entgegenhaltungen:
- EP-A1- 2 439 603
- EP-A2- 2 211 114
- WO-A1-2012/045371
- WO-A1-2012/051726
- DE-A1-102008 032 450
- DE-A1-102009 058 258
- JP-A- H10 118 986
- US-A1- 2007 093 937

## Beschreibung

Die vorliegende Erfindung bezieht sich auf eine Lebensmittelaufschneidevorrichtung mit einer Betätigungsvorrichtung und einer Anzeige gemäß dem Anspruch 1.

Die vorliegende Erfindung bezieht sich weiterhin auf ein Verfahren zum Betrieb einer Lebensmittelaufschneidevorrichtung mit einer mittels Berührung bedienbaren Anzeige gemäß Anspruch 9.

Im Stand der Technik sind bislang vor allem Bedienoberflächen für Lebensmittelverarbeitungsvorrichtungen bekannt, deren Menüpunkte in einer Baumstruktur gegliedert sind. Dabei wird auf der Anzeige ein Hauptfeld angezeigt, wobei seitlich wählbare Reiter, bzw. Menüauswahlelemente angeordnet sind, die die jeweils im Hauptfeld angezeigten, bzw. veränderbaren Informationen bestimmen. Dabei sind den Menüauswahlelementen der entsprechende Informationsinhalt sowie die Art der Anzeige nach dem Aktivieren, insbesondere in Bezug auf Form und Größe, fest zugeordnet. Zudem kann in einem Bereich des Bildschirms eine immer sichtbare Betriebsparameteranzeige vorhanden sein, in der das aktuell von der Lebensmittelverarbeitungsvorrichtung ausgeführte Programm, der Bediener und ein Betriebsstatus wiedergegeben werden können. Um zwischen verschiedenen Hauptfeldern und ihren Untermenüs umzuschalten, muss eine Bedienerkennung oft erst zu den Menüauswahlelementen zurückkehren und das gewünschte Hauptfeld auswählen, bevor er darin gewünschte Information anzeigen oder verändern kann. Weiterhin ist bisher durch die baumartige Menüstruktur eine Aufteilung der Anzeigen-Inhalte zwischen Produktparametern auf der einen und Maschinenparametern auf der anderen Seite gegeben. Auch dies bedingt Einstellungen an verschiedenen Stellen.

Aus der DE 10 2008 032 450 A1 ist ein Gargerät bekannt, auf dessen Eingabedisplay mehrere Symbole angezeigt werden, wobei bei Auswahl eines Symbols ein Untermenü geöffnet wird, und dafür die anderen Symbole verschoben werden.

Aus der WO 2012/051 726 A1 ist eine Produktweiterverarbeitungsanlage bekannt, die über ein Endgerät mit einer Anzeige bedient werden kann. Dabei können Widgets von einem Informationsbereich in eine Navigationsleiste der Anzeige verschoben werden, wobei dabei die in der Navigationsleiste miniaturisiert dargestellten Widgets jeweils horizontal so verschoben werden, dass genügend Platz für eine überlappungsfreie Positionierung der Widgets geschaffen wird.

Ausgehend von diesem Stand der Technik ist es die Aufgabe der Erfindung eine Lebensmittelverarbeitungsvorrichtung und ein Verfahren zum Betrieb einer Lebensmittelverarbeitungsvorrichtung bereitzustellen, bei der die Bedienbarkeit und die Überwachung von relevanten Parametern des Lebensmittelverarbeitungsprozesses verbessert sind.

Die Erfindung stellt eine Lebensmittelaufschneidevorrichtung mit einer Betätigungsvorrichtung und einer Anzeige bereit, wobei die Anzeige ausgelegt ist, in einem Anzeigemodus ein Übersichtsfeld mit wenigstens zwei Anzeigeelementen anzuzeigen, und wobei die Anzeige ausgelegt ist, nach einer entsprechenden Betätigung der Betätigungsvorrichtung in einen Bedienmodus überzugehen und in einem Bereich der teilweise das vormalige Übersichtsfeld umfasst, ein Bedienfeld mit wenigstens einem Bedienelement anzuzeigen. Erfindungsgemäß ist die Anzeige ausgelegt, dass die Anzeigeelemente Statusparameter der Lebensmittelaufschneidevorrichtung wiedergeben, auf die wenigstens teilweise mittels des wenigstens einen Bedienelements Einfluss genommen werden kann, und dass sich das Übersichtsfeld beim Übergang in den Bedienmodus entsprechend verkleinert, und dass die wenigstens zwei Anzeigeelemente in ihrer Größe, Form und/oder relativen Anordnung an die aktuelle Größe und/oder Form des Übersichtsfelds angepasst werden. Das Übersichtsfeld ist somit adaptiv bezüglich einer Veränderung, insbesondere Größen- und Formänderung, des Bedienfelds.

Dies ermöglicht, dass die Anzeigeelemente beim Übergang in den Bedienmodus immer noch sichtbar sind, wobei die Anzeigeelemente den jeweils für sie noch verfügbaren Platz auf der Anzeige vorteilhaft ausnutzen, und insbesondere die jeweils relevanteste Information für den Benutzer in möglichst übersichtlicher Weise präsentieren. Damit wird eine ständige Kontrolle des Lebensmittelverarbeitungsprozesses und des von der Lebensmittelaufschneidevorrichtung produzierten Endproduktes bei gleichzeitiger Bedienbarkeit der Lebensmittelaufschneidevorrichtung ermöglicht. Es ist also insbesondere eine gleichzeitig Überwachung einer Kombination von Maschinen- und Produktparametern möglich. Im Gegensatz dazu werden bei manchen Lösungen im Stand der Technik wichtige Prozessparameter nicht, oder nicht hervorgehoben genug dargestellt, während der Benutzer durch die Bedienmenüs einer Bedienanzeige einer Lebensmittelverarbeitungsvorrichtung navigiert. Damit kann es zu Fehlbedienungen kommen oder zumindest wird keine so effiziente und intuitive Bedienung der Maschine wie bei der vorliegenden Erfindung ermöglicht.

Insbesondere weist die Lebensmittelaufschneidevorrichtung ein Speichermodul auf, in dem insbesondere Maschinenzustandsgrößen, Maschinenstellgrößen und/oder Produktparameter gespeichert werden. Bei den Maschinenstellgrößen handelt es sich um Vorgaben der aktiv geregelten Stellglieder der Lebensmittelaufschneidevorrichtung Wenn die Lebensmittelaufschneidevorrichtung bspw. ein Slicer ist, sind ihre Stellglieder insbesondere der Antrieb eines Schneidmessers, der Vorschub einer Lebensmittelproduktzuführung, sowie die Position und der Greifzustand eines Greifers, der ein dem Schneidmesser abgewandtes Ende des Lebensmittelproduktes ergreifen kann. Entsprechend werden als Maschinenstellgrößen der Vorschub des Lebensmittelprodukts, die Rotationsgeschwindigkeit des Schneidmessers und die Greiferbewegung vorgegeben. Maschinenzustandsgrößen umfassen insbesondere die Temperaturen und Leistungen der einzelnen Stellgrößen, aber auch abgeleitete Parameter wie bspw. eine Verschleißüberwachungskenngröße oder Reinigungsintervalle.

Die Produktparameter umfassen insbesondere Parameter bezüglich des Ausgangszustandes des Lebensmittelproduktes, wie bspw. die Länge, Konsistenz und/oder Art einer Lebensmittelstange oder der vorangehend bestimmte Querschnitt und/oder der volumetrisch bestimmte Fettgehalt eines natürlich geformten Lebensmittelproduktes.

Diese Größen können auf den Anzeigeelementen angezeigt bzw. durch die Bedienfelder wenigstens teilweise eingestellt bzw. abgeändert werden.

Die Erfindung ist weiterhin auf nur eine Benutzerschnittstelle für eine Lebensmittellaufschneidevorrichtung mit einer Anzeige und einer Betätigungsvorrichtung mit den vorgenannten Merkmalen gerichtet.

Vorteilhafterweise wird die Betätigungsvorrichtung durch eine Anzeige gebildet, die berührungsempfindlich gestaltet ist. Somit handelt es sich bei der Anzeige um einen Touchscreen, wodurch die Betätigungsvorrichtung im Wesentlichen deckungsgleich mit der Anzeige ausgebildet wird. Dies ermöglicht, dass die Anzeige durch auf ihr ausgeführte Berührungseingaben bedienbar ist. Insbesondere ist die berührungsempfindliche Anzeige als kapazitiver Touchscreen ausgeführt. Alternativ ist es aber auch möglich, dass die Betätigungsvorrichtung von der Anzeige abgesetzt vorgesehen wird, bspw. als Bedienpanel mit Knöpfen, Schaltern, Schiebern und/oder Drehelementen.

Die Anzeigeelemente sind ausgelegt, Statusparameter der Lebensmittellaufschneidevorrichtung wiederzugeben, auf die wenigstens teilweise mittels des wenigstens einen Bedienelements Einfluss genommen werden kann. Die Statusparameter der Lebensmittellaufschneidevorrichtung umfassen vornehmlich Maschinenzustandsgrößen, die sensorisch ermittelt werden, oder Maschinenstellgrößen, die durch die Bedienelemente direkt verstellt werden können. Alternativ können die Statusparameter durch die Bedienelemente nur indirekt verstellt werden, bspw. wenn ein Bedienelement eine Vielzahl von Statusparametern verstellt oder wenn die Eingabe der Bedienelemente mit sensorisch ermittelten Zustandsgrößen verarbeitet wird, wie bspw. in einer Regelungsschleife. Dennoch schlägt sich die Eingabe durch den Benutzer auf dem wenigstens einen Bedienelement in dem angezeigten Wert wenigstens eines der Anzeigeelemente nieder.

In einer Ausführungsform ist die Anzeige so ausgelegt, dass die Größe des Bedienfelds graduell oder kontinuierlich verstellbar ist, und die Größe des Übersichtsfelds sich graduell oder kontinuierlich anpasst. D.h., die Größe des Bedienfelds kann entweder kontinuierlich oder in einer graduellen Abfolge von wenigstens drei diskreten Schritten in ihrer Größe verstellt werden. Die Größe des Übersichtsfelds passt sich jeweils entsprechend an. Insbesondere nimmt das Übersichtsfeld den Platz auf der Anzeige ein, der durch das Bedienfeld freigegeben wird, bzw. gibt den Platz auf dem Bedienfeld frei, der durch das Bedienfeld eingenommen wird.

Vorteilhafterweise ist die Anzeige so ausgelegt, dass in dem Bedienfeld mehrere Bedienelemente vorgesehen sind, die ihre Größe, Form und/oder relative Anordnung an die aktuelle Größe des Bedienfelds anpassen. Beispielsweise kann mit zunehmender Größe einzelner Bedienelemente auch eine zunehmende Anzahl von Eingabemitteln in den jeweiligen Bedienelementen angezeigt werden. Wenn die Bedienfelder eine gewisse Größe unterschreiten, können in manchen Ausführungsformen zumindest in einem der Bedienelemente keine Eingabemittel mehr angezeigt werden, sodass das Bedienfeld lediglich Informationen wiedergibt, bspw. den Namen der mit ihr verstellbaren Verstellgröße oder deren Wert.

Die Eingabemittel der Bedienelemente sind insbesondere virtuelle Knöpfe, Schieber, Schalter oder numerische oder alphabetische Eingabefelder. Diese Elemente werden ausschließlich auf der Anzeige dargestellt.

In einer Ausführungsform ist die Anzeige so ausgelegt, dass mehrere Bedienfelder vorgesehen sind, die alternativ oder gleichzeitig, graduell oder kontinuierlich in ihrer Größe und/oder Form veränderbar sind, und dass das Übersichtsfeld den nicht von den Bedienfeldern belegten Bereich der Anzeige einnimmt. Insbesondere können die jeweiligen Bedienfelder ausgehend von verschiedenen Seiten der Anzeige vergrößert und verkleinert werden. Damit kann eine "sternförmige" Anordnung der Menüelemente bzw. Bedienelemente erfolgen, die in den jeweiligen Bedienfelder dargestellt werden. Jedes Bedienfeld kann dabei die Bedienelemente aus einer Baumstruktur aufweisen, wobei sich die Details von unterschiedlichen Verästelungen der Baumstruktur mit zunehmend eingeblendeten Bedienfeldern oder mit Auswahl der Bedienelemente in den eingeblendeten Bedienfeldern zunehmend konkretisieren. Somit wird eine intuitive Bedienung der Lebensmittelverarbeitungsvorrichtung erreicht, indem mit den angezeigten Inhalten parallel auf eine Maschinen- und Produktsicht zurückgegriffen werden kann.

In einer Ausführungsform stellt wenigstens ein Bedienelement in einer Konfiguration des Bedienfelds einen Bedienbereich mit wenigstens einem Eingabemittel zur Bedienung der Lebensmittelaufschneidevorrichtung bereit. Insbesondere wird das Bedienelement mit zunehmender Größe des Bedienfeldes vergrößert. Mit zunehmender Größe des Bedienelementes kann zudem eine zunehmende Anzahl an Eingabemitteln im Bedienelement eingeblendet werden.

Weiterhin kann wenigstens ein Bedienelement einen Anzeigebereich zur Anzeige von Informationen umfassen. Die angezeigte Information ist vornehmlich die Stellgröße, die mit dem Bedienelement verändert wird. Vorteilhafterweise werden allerdings auch davon abhängige Stellgrößen angezeigt. Somit können bspw. in einem Bedienelement der Vorschub und die Rotationsgeschwindigkeit eines Schneidmessers einer Lebensmittelaufschneidevorrichtung angezeigt werden, und die davon abgeleitete Stellgröße der Dicke der jeweils abgeschnittenen Scheiben.

Weiterhin kann die Anzahl der Bedienelemente in Abhängigkeit der Größe und/oder Form ihres zugeordneten Bedienfeldes variiert werden. Damit wird ermöglicht, dass eine zunehmende Anzahl von Stellgrößen durch den Benutzer verstellt werden kann. Es werden zunächst nur die wichtigsten, d.h. am häufigsten bedienten Stellgrößen im Bedienfeld zur Verstellung angeboten. Wird das Bedienfeld vergrößert, werden zusätzliche Bedienfelder eingeblendet, die die Verstellung von untergeordneten oder weniger oft zu verstellenden Stellgrößen ermöglichen. Somit wird eine intuitive Bedienung der Maschine ermöglicht, die eine hohe Übersichtlichkeit für den Benutzer aufweist.

In manchen Ausführungsformen kann die Anzahl der Anzeigeelemente im Übersichtsfeld konstant gehalten werden. Dies ermöglicht, dass der Benutzer immer die gewohnten Anzeigeelemente im Übersichtsfeld wiederfindet, auch wenn diese ihre Größe und/oder Form und/oder Anordnung ändern. Insbesondere kann der Detaillierungsgrad der angezeigten Informationen in den Anzeigeelementen erhöht werden, wenn das Übersichtsfeld die dafür erforderliche Größe aufweist, wobei die relevantesten Informationen angezeigt werden, wenn das Übersichtsfeld aufgrund von einem oder mehreren vergrößerten Bedienfeldern nur noch eine geringe Größe hat.

In anderen Ausführungsformen ist es aber auch möglich, dass mit zunehmender Größe des Übersichtsfeldes eine zunehmende Anzahl von Anzeigeelementen eingeblendet wird.

In einer Ausführungsform weist wenigstens eines der Anzeigeelemente ein Eingabemittel auf, dass eine Veränderung der Darstellung der Statusparameter auf dem Anzeigeelement oder die Anzeige von zusätzlichen Erläuterungen ermöglicht. Dieses Eingabemittel kann insbesondere ein Informationssymbol sein, bei dessen Berührung oder Betätigung ein Feld mit zusätzlichen Erläuterungen zu dem Anzeigeelement eingeblendet wird. Weiterhin kann das Eingabemittel die Art der Darstellung der Statusparameter auf dem Anzeigeelement verändern. Bspw. kann von einer Diagrammansicht zu einer numerischen Ansicht gewechselt werden oder es kann der Detaillierungsgrad der Anzeige umgeschaltet werden. Es ist auch möglich, dass durch Antippen der jeweiligen Anzeigeelemente die Darstellung der jeweils in den Anzeigeelementen enthaltenen Informationen verändert wird, bspw. durch zyklisches Ein- und Ausblenden von Diagrammen oder durch den Übergang von Prozentual- auf Absolutwerte. Weiterhin kann durch Betätigung eines Eingabemittels bspw. ein erläuterndes Video abgespielt werden, welches dann auf die aktuelle Bedienebene und die dafür notwendige Informationstiefe angepasst sein.

In manchen Ausführungsformen dienen die Anzeigefelder aber ausschließlich zur Datenanzeige und weisen keinerlei Eingabemittel auf. Damit kann sichergestellt werden, dass die Anzeigemittel nicht durch den Benutzer in ungünstiger Form verstellt werden, sodass wichtige Informationen immer angezeigt werden.

Die Erfindung stellt weiterhin ein Verfahren zum Betrieb einer Lebensmittelaufschneidevorrichtung mit einer mittels Berührung bedienbaren Anzeige bereit, das die folgenden Schritte aufweist. Ein Übersichtsfeld mit wenigstens zwei Anzeigeelementen wird angezeigt, wobei die Anzeigeelemente Statusparameter der Lebensmittelaufschneidevorrichtung wiedergeben, auf die wenigstens teilweise mittels wenigstens einem Bedienelement Einfluss genommen werden kann. Die Anzeige wird betätigt, sodass die Anzeige in einem Bereich, der teilweise das vormalige Übersichtsfeld umfasst, ein Bedienfeld mit dem wenigstens einen Bedienelement anzeigt. Das Übersichtsfeld wird entsprechend verkleinert, sodass die wenigstens zwei Anzeigeelemente in Ihrer Größe, Form und/oder relativen Anordnung an die aktuelle Größe und/oder Form des Übersichtsfelds angepasst werden. Die über Berührung bedienbare Anzeige ist ein Touchscreen, die Eingaben werden direkt auf der Anzeige ausgeführt. Die Eingaben können bspw. ein Antippen, eine Ziehbewegung, eine Kreisbewegung und sogenannte Multitoucheingaben umfassen, wie bspw. das Aufspreizen von zwei oder mehr Fingern, oder die Abhängigkeit der Eingabe von der Anzahl der verwendeten Finger.

Vorteilhafterweise ist das wenigstens eine Bedienfeld mittels einer Ziehbewegung durch den Benutzer auf der Anzeige graduell oder kontinuierlich vergrößerbar und verkleinerbar, wobei der Umfang der Information und/oder Bedienelemente sich (wahlweise) vergrößert oder vermindert. Alternativ kann eine Vergrößerung des Bedienfelds auch lediglich durch Antippen des Bedienfelds oder eines zugeordneten Eingabemittels erfolgen. Die Ziehbewegung ermöglicht aber insbesondere eine Skalierbarkeit der Verstellung der Größe des Bedienfeldes. Insbesondere werden je nach Größe des Bedienfeldes die Bedienelemente gemäß ihrer Relevanz eingeblendet oder detailliert.

In manchen Ausführungsformen sind durch Ziehbewegungen ausgehend von den jeweiligen Rändern der Anzeige, jeweils den jeweiligen Rändern zugeordnete Bedienfelder vergrößerbar und/oder in den Vorder- oder Hintergrund holbar. Dies ermöglicht wieder die vorangehend beschriebene "sternförmige" Menüstruktur, wobei hier zusätzlich eine Skalierbarkeit der jeweiligen Bedienfelder vorgesehen werden kann.

Vorteilhafterweise ist die Anzahl der Anzeigeelemente im Übersichtsfeld durch eine Ziehbewegung des Benutzers im Übersichtsfeld erhöhbar, wobei sich die vor der Ziehbewegung dargestellten Anzeigeelemente in ihrer Größe, Form und/oder relativer Anordnung verändern, um bei gleichbleibender Größe des Übersichtsfeldes die Anzeige der zusätzlichen Anzeigeelemente zu ermöglichen. Somit können durch die Ziehbewegung zusätzliche Anzeigeelemente eingeblendet werden, was die Anzahl der angezeigten Statusparameter erhöhen kann. Der Ziehweg entspricht somit der gewünschten Informationstiefe bzw. Detaillierungsrichtung im Sinne von Informationsschwerpunkten in einem baumartigen Menü im Hintergrund. Wird die Anzahl der Anzeigeelemente reduziert, kann die Übersichtlichkeit der Anzeige erhöht werden oder die Detaillierung der jeweils verbleibenden Anzeigeelemente. Somit kann die Anzeigegenauigkeit und Übersichtlichkeit jeweils an die Anforderungen des Benutzers angepasst werden.

In einer Ausführungsform wird ein graphisches Element auf der Anzeige mit der Ziehbewegung mitgeführt. Damit kann dem Benutzer eine Rückmeldung bezüglich der Ziehbewegung gegeben werden. Insbesondere kann das graphische Element ein virtueller Bedienknopf oder ein virtueller Schieber sein. Das graphische Element kann auch angezeigt werden, wenn der Benutzer die Anzeige nicht berührt. In anderen Fällen wird das graphische Element nur angezeigt, wenn der Benutzer die Anzeige berührt. Das graphische Element kann bei Betätigung mit einer Aktivierungsmarkierung, z. B. einer Hervorhebung oder Umrandung versehen werden, um seine Funktion optisch zu verdeutlichen oder damit den nächsten Bedienschritt vorzuschlagen.

In einer Ausführungsform des Verfahrens ermittelt die Lebensmittelaufschneidevorrichtung einen Benutzungsberechtigungsgrad des Bedieners, und der Inhalt und/oder die Anzeige des wenigstens einen Bedienelements und/oder der Anzeigeelemente erfolgt in Abhängigkeit von dem Benutzerberechtigungsgrad. Der Benutzerberechtigungsgrad kann bspw. durch eine Identifizierung des Benutzers erfolgen, wobei die Identität des Benutzers vorteilhafterweise einer Benutzergruppe zugeordnet ist, die einen bestimmten Berechtigungsgrad aufweist. Es können Nutzungsgruppen auf verschiedenen Ebenen gebildet werden, beispielsweise einfache Bediener, Meister und Kundendienstmitarbeiter. Der Benutzungsberechtigungsgrad kann dadurch ermittelt werden, dass Benutzer ein entsprechendes Passwort oder eine PIN eingibt oder eine Smartcard bei sich trägt. Zudem kann in Abhängigkeit der Benutzungsberechtigung der mögliche Detaillierungsgrad der angezeigten Informationen variiert werden. Somit wird nur soviel Informationstiefe in die Anzeige gebracht, wie bezüglich der Kompetenz des Benutzers erforderlich ist. Erfindungsgemäß bieten sich durch diese frei von einem entsprechend berechtigten Benutzer anpassbare Anzeige große Vorteile im Hinblick auf effiziente Bedienung und Betriebssicherheit.

Auf dem wenigstens einen Bedienelement können Bedienparameter angezeigt werden, die durch den Benutzer verstellt werden können, wobei eine Verstellung eines insbesondere abstrakten Bedienparameters eine Verstellung mehrerer Maschinenstellgrößen bewirken kann. Dies ermöglicht, dass nicht jede Maschinenstellgröße einzeln eingestellt werden muss, sondern das zugehörige Maschinenstellgrößen gemeinsam verstellt werden. So können bspw. durch die Einstellung eines abstrakten Bedienparameters aus der Produktsicht, der die Anzahl von Scheiben pro Minute angibt, gleichzeitig der Vorschub und die Schneidmesserrotationsgeschwindigkeit einer Lebensmittelaufschneidvorrichtung eingestellt werden. Die Verknüpfung mehrerer Maschinenstellgrößen in Abhängigkeit von einem abstrakten Bedienparameter, entweder aus der Produktsicht oder aus der Maschinensicht, ermöglicht somit eine erheblich einfachere Benutzung der Maschine.

Insbesondere kann der Bedienparameter ein Produktparameter sein, wie bspw. Durchmesser, Querschnittsfläche, Konsistenz, Art oder Temperatur eines zu verarbeitenden Lebensmittelproduktes oder Vorgaben zur Portionserstellung. Entsprechend können die Maschinenstellgrößen angepasst werden. Bspw. kann bei einem höheren Durchmesser eines Lebensmittelproduktes die maximale Schneidgeschwindigkeit einer Lebensmittelaufschneidevorrichtung begrenzt werden.

Die Erfindung wird im Folgenden anhand von Ausführungsbeispielen, dargestellt in den folgenden Figuren, weitergehend erläutert.
- Figur 1: zeigt eine schematische Seitenansicht einer erfindungsgemäßen Ausführungsform einer Lebensmittelaufschneidevorrichtung.
- Figur 2: zeigt eine Anzeige einer erfindungsgemäßen Ausführungsform einer Lebensmittelaufschneidevorrichtung.
- Figur 3: zeigt die Anzeige einer erfindungsgemäßen Ausführungsform einer Lebensmittelaufschneidevorrichtung.
- Figur 4: zeigt die Anzeige einer erfindungsgemäßen Ausführungsform einer Lebensmittelaufschneidevorrichtung.
- Figur 5: zeigt die Anzeige einer erfindungsgemäßen Ausführungsform einer Lebensmittelaufschneidevorrichtung.

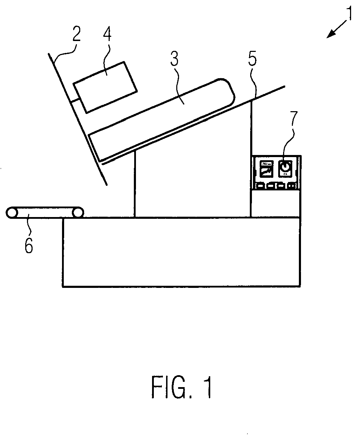

In Figur 1 ist eine Lebensmittelaufschneidevorrichtung 1 in Form eines Slicer, dargestellt. In der Lebensmittelaufschneidevorrichtung 1 wird mittels eines rotierenden Schneidmessers 2 ein Lebensmittelprodukt 3 aufgeschnitten. Das Lebensmittelprodukt 3 ist insbesondere eine Lebensmittelstange, d. h. vornehmlich eine Käsestange, Wurststange oder Schinkenstange. Alternativ kann das Lebensmittelprodukt auch ein natürlich geformtes Lebensmittelprodukt sein, wie beispielsweise ein Schinken- oder Käselaib. Das Schneidmesser 2 wird in seiner Rotation durch einen Antrieb 4 angetrieben. Bei dem Schneidmesser 2 kann es sich entweder um ein Kreismesser oder um ein Sichelmesser handeln. Das Lebensmittelprodukt 3 wird mittels eines Vorschubantriebs auf der Vorschubstrecke 5 zum Schneidmesser 2 zugeführt, wobei vom Lebensmittelprodukt 3 abgeschnittene Scheiben auf eine Ablage 6 fallen. Die Ablage 6 kann als Fördermittel, insbesondere in Form eines Förderbands, ausgebildet sein.

Die Lebensmittelaufschneidevorrichtung 1 weist eine Anzeige 7 auf, die in Form eines Touchscreens gestaltet ist und im Folgenden näher beschrieben wird. Die Anzeige 7 ermöglicht eine Steuerung der Lebensmittelverarbeitungsvorrichtung 1 durch einen Benutzer. Weiterhin stellt die Anzeige 7 Statusparameter und sonstige Informationen bezüglich der Lebensmittelaufschneidevorrichtung 1 dar.

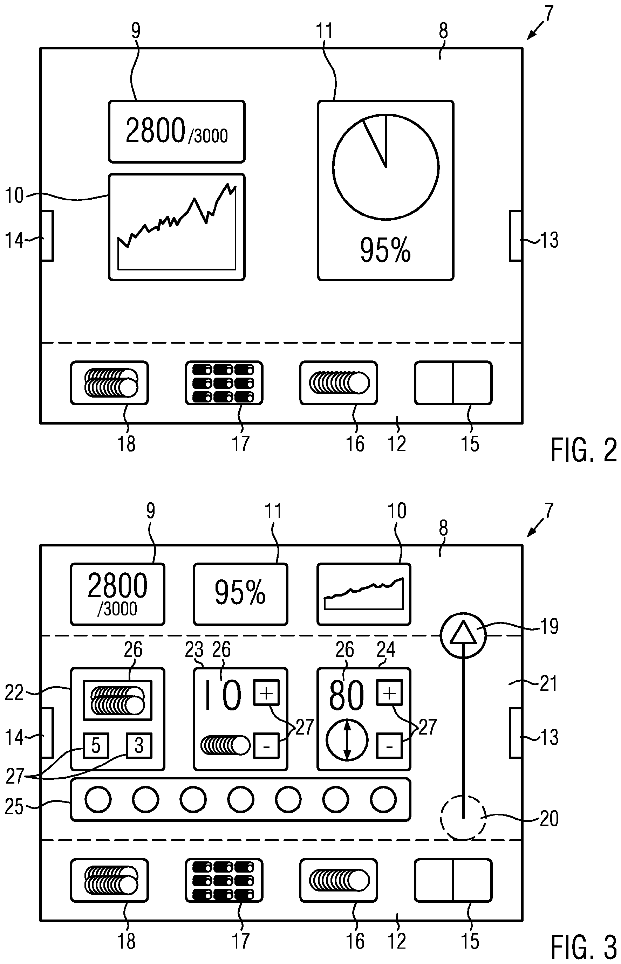

In Figur 2 ist die Anzeige 7 in einem Übersichtsmodus dargestellt. Im Übersichtsmodus wird fast der gesamte Bereich der Anzeige 7 durch ein Übersichtsfeld 8 eingenommen, in dem im vorliegenden Ausführungsbeispiel drei Anzeigeelemente 9, 10, 11 dargestellt werden.

Die gesamte Anzeige 7 wird in der vorliegenden Ausführungsform lediglich durch einen berührungsempfindlichen Bildschirm, insbesondere einen LCD-Bildschirm, gebildet. Die Anzeige 7 bildet eine Mensch-Maschinen-Schnittstelle (HMI, Human-Machine-Interface), die über eine Middleware, die unter anderem einen Server für eine Vermittlung der Ein- und Ausgabe und eine Datenbank umfasst, mit mindestens einer speicherprogrammierbaren Steuerung und mindestens einer Komponentensteuerung verbunden ist. In der Datenbank können insbesondere historische Daten, d. h. aufgezeichnete Stell- oder Messgrößen, Schneidprogramme, erläuternde Texte in verschiedenen Sprachen, Bilder, Videos usw. hinterlegt sein.

Das Übersichtsfeld 8 bildet somit ein Dashboard. Das Bedienelement 9 zeigt die Ist- und die Sollleistung der Maschine an, das Übersichtsfeld 10 zeigt den Status und einen fehlerkritischen Parameter als Diagramm über die Zeit an, und das Anzeigeelement 11 zeigt den Anteil der Gutproduktion als numerischen Wert und als Tortendiagramm an. Ähnlich wie Anzeigeelement 11, könnte noch ein weiteres Anzeigeelement vorgesehen sein, das den sogenannten "Give-away" angibt, nämlich den Anteil des aufgeschnittenen Lebensmittelprodukts, der über den vorgesehenen Portionsgewichten liegt und somit unnötig portioniert wurde. Somit hat der Benutzer der Maschine durch nur einen Blick auf die Anzeige einen Überblick über die aktuelle und historische Leistung der Lebensmittelaufschneidevorrichtung. Die Anzeige des Übersichtsfelds 8 kann insbesondere die Eingabe einer Benutzeridentifizierung erfordern, ist aber gemeinhin frei zugänglich. Weiterhin sind in der Anzeige bereits die Bedienfelder 12, 13, 14 dargestellt, oder wenigstens in ihrem Bereich konfiguriert. Während die Bedienfelder 13 und 14 noch keine Bedienelemente anzeigen, werden im Bedienfeld 12 bereits die Bedienelemente 15, 16, 17, 18 angezeigt. Die Bedienelemente 15, 16, 17, 18 können sich darin erschöpfen, dass durch ihre Auswahl weitere Bedienelemente dargestellt werden, d. h. es kann vorgesehen sein, dass durch die Auswahl der Bedienelemente 15, 16, 17, 18 noch keine Stellgröße der Lebensmittelaufschneidevorrichtung direkt verändert wird.

Das Bedienfeld 12 stellt somit in Figur 2 lediglich ein Menü dar, mit dem zu weiteren Bedienfeldern navigiert werden kann, die später diskutiert werden.

Das Übersichtsfeld 8 ist die Hauptansicht zum aktuellen Zustand der Lebensmittelaufschneidevorrichtung Das Übersichtsfeld 8 und die Anzeigeelemente 9, 10, 11 darin können anlagenabhängig programmierbar sein, oder beim Einrichten der Lebensmittelaufschneidevorrichtung vorbestimmt werden.

Wie in Figur 3 gezeigt wird, kann ein virtueller Bedienknopf 19 von einer ersten Position 20 durch eine Ziehbewegung verschoben werden, und insbesondere bis in eine zweite Position gezogen werden, in der der Bedienknopf 19 in Figur 3 dargestellt ist. Der Bedienknopf 19 stellt lediglich ein graphisches Element dar, das auf der Anzeige 17 mit einer Ziehbewegung des Benutzer mitgeführt wird. Der virtuelle Bedienknopf 19 kann ohne Berührung des Benutzers ausgeblendet werden oder er kann durchgehend angezeigt werden. Weiterhin kann der virtuelle Bedienknopf 19 immer an der Stelle erscheinen, an der der Benutzer, möglichst außerhalb der Anzeigeelemente 9, 10, 11, das Übersichtsfeld 8 berührt, und seine jeweils relative Bewegung kann erfasst werden. Durch die Ziehbewegung in Figur 3 wird ein vorher nicht vorhandenes Bedienfeld 21 graduell vergrößert. Während der Vergrößerung des Bedienfelds 21 erscheinen auf diesem sequentiell oder gleichzeitig die Bedienelemente 22, 23, 24, 25. Das Übersichtsfeld 8 verkleinert sich entsprechend. Die Bedienelemente 22, 23, 24, 25 nehmen den verfügbaren Platz im Bedienfeld 21 optimal ein und verändern gegebenenfalls ihre relative Anordnung dafür. Weiterhin ändert sich die Größe der einzelnen Bedienelemente 22 bis 25 jeweils entsprechend. So weisen die Bedienelemente 22 bis 25 jeweils Anzeigebereiche 26 auf, in denen insbesondere die Stellgrößen der Bedienelemente 22 bis 25 dargestellt werden, die mittels der Eingabemittel 27 eingegeben werden. Die Stellgrößen der jeweiligen Bedienelemente 22 bis 25 sind insbesondere die jeweiligen Abstände von Lebensmittelscheiben vom Rand einer Verpackung im Einleger, die Anzahl der Scheiben pro Portion, der Durchmesser der als Lebensmittelprodukt zugeführten Lebensmittelstange, die Leistung der Lebensmittelaufschneidevorrichtung die relative Positionierung von einzelnen Lebensmittelportionen zueinander auf der Ablage 6 oder auf einem nachgeordneten Positionierer, die Länge des Lebensmittelprodukts sowie die Länge dessen Anfangs- und Endstücks, und/oder die Länge der Überlappung der einzelnen Lebensmittelscheiben in einer Portion. Mit zunehmendem Verschieben des virtuellen Bedienknopfes 19 und damit steigender Größe der Bedienelemente 22, 23, 24, 25 kann die Detaillierung in den einzelnen Bedienelementen 22 bis 25 erhöht werden. So kann beispielsweise in dem Bedienfeld für die Leistung zunächst durch einen Schieber die Leistung insgesamt vorgegeben werden, wobei bei zunehmender Detaillierung die Schnittgeschwindigkeit und die Bandgeschwindigkeit separat eingestellt werden können.

Alternativ kann bei der Bewegung des virtuellen Bedienknopfes 19 innerhalb des Übersichtsfeldes 8 auch nur ein zusätzliches Einblenden von Anzeigeelementen erfolgen. Durch das Verschieben des virtuellen Bedienknopfes 19 wird somit die Tiefe und Detaillierung der jeweiligen angezeigten oder einstellbaren Informationen bestimmt. Weiterhin ist mit dem virtuellen Bedienknopf 19 eine konfigurierbare Parameterdarstellung verknüpft, wobei diese Konfiguration in Abhängigkeit der Lebensmittelaufschneidevorrichtung oder der gesamten Fertigungslinie erfolgen kann und/oder auch im Zusammenhang mit einem Berechtigungskonzept. Beispielsweise kann ein Meister mehr Einstellmöglichkeiten haben als ein einfacher Maschinenbediener. Der virtuelle Bedienknopf 19 kann mit einem Aktivierungsmarkierung versehen sein. Beispielsweise kann der Bedienknopf 19 bei Betätigung durch eine ringförmige Umrandung hervorgehoben werden. Damit wird die Bedienung des Bedienknopfes 19 für den Benutzer klar ersichtlich. Wie in Figur 3 dargestellt ist, verkleinert sich das Übersichtsfeld 8 mit zunehmender Größe des Bedienfeldes 21. Entsprechend ändert sich die Anordnung der Anzeigeelemente 9, 10, 11, die jetzt nebeneinander und nicht teilweise übereinander wie in Figur 2 angeordnet sind. Auch die Darstellung der Information innerhalb der Anzeigeelemente 9, 10, 11 ändert sich. So wird in Anzeigeelement 9 nun die numerische Darstellung zweiteilig wiedergegeben, und in Anzeige 11 das Tortendiagramm nicht mehr dargestellt, sondern lediglich die numerische Prozentanzeige. Das Anzeigeelement 10 wird lediglich in seiner Position und Größe verändert.

Weiterhin kann mit einem Bedienelement, beispielsweise mit dem Bedienelement 15 eine Umschaltung der angezeigten Anzeigeelemente im Bedienfeld und/oder Übersichtsfeld 8 erfolgen. Diese Umschaltung ist insbesondere eine Umschaltung zwischen einer Maschinensicht und einer Produktsicht. In einer Produktsicht werden im Übersichtsfeld 8 und/oder im eventuell eingeblendeten Bedienfeld 21 vornehmlich Anzeigeelemente und Bedienelemente angezeigt, die Produktparameter darstellen oder produktspezifische Stellgrößen einstellen lassen. Diese Größe umfassen insbesondere Parameter bezüglich der Übergabe des Produkts, des Formats des Produkts, der Überlappung des Produkts, der Portionierung des Produkts und des Kalibers des Produkts. In der Maschinensicht werden insbesondere Bedienelemente und Anzeigeelemente bezüglich Stell- und Zustandsgrößen des Slicers, eines Scanners, einer Pellmaschine, eines Beladepuffers, einer Wippe, einer Waage, eines oder einer mehrerer Einleger oder Verpackungsmaschine angezeigt.

Weiterhin können funktionale Bedien- oder Anzeigeelemente bezüglich der Positionierung, des Schneidens und/oder Ladens des Produktes angezeigt werden.

In den Bedien- und Anzeigeelementen wird der Benutzer weitgehend über Piktogramme geführt. Erklärungen in Textform werden vornehmlich vermieden. Allerdings können Informationsfelder auf den Anzeigeelementen 9, 10, 11 oder Bedienelementen 22 bis 25 angezeigt werden, bspw. in Form eines kleinen Buchstabens "i", mit denen zusätzlichen Erläuterungen bis hin zu Erklärungsvideos eingeblendet werden können. Ansonsten werden zu den Piktogrammen nur die jeweiligen Parametersätze angezeigt. Dies ermöglicht Verständnisvorteile zur Erhöhung der Bediengeschwindigkeit und zur Fehlervermeidung.

Die bei Bedienung des virtuellen Bedienknopfes 19 eingeblendeten Bedienelemente im Bedienfeld 21 können in Abhängigkeit des Umschaltebedienelements 15 Bedienelemente bezüglich der Maschinensicht oder bezüglich der Produktsicht sein.

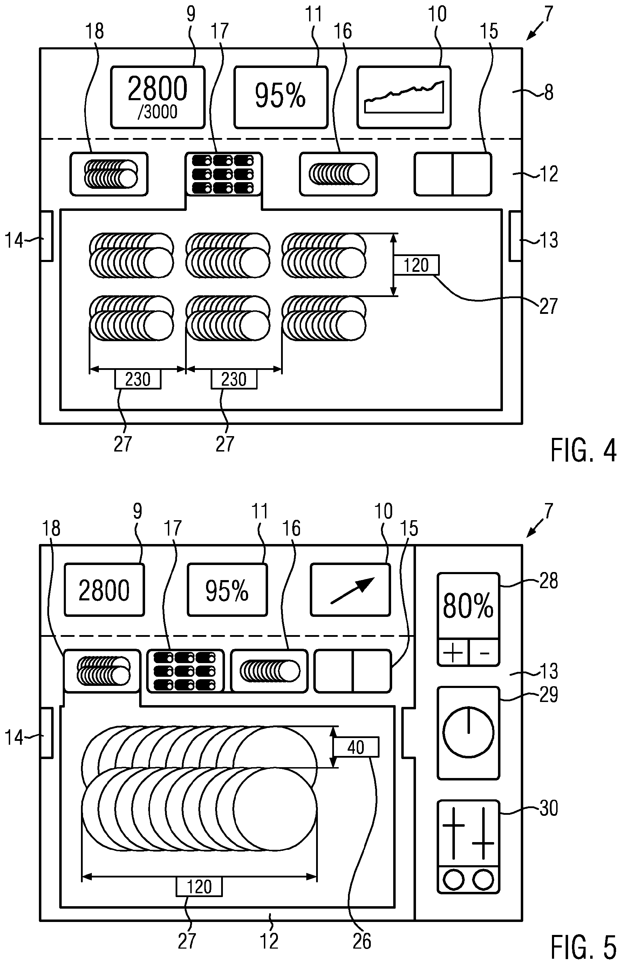

Die weiteren Bedienelemente 16, 17, 18 des Bedienfelds 12 stellen symbolisch die komplette Lebensmittelverarbeitungslinie dar, einschließlich der jeweiligen Maschinenkomponenten. Durch Anwählen der jeweiligen Bedienelemente 16, 17, 18, die die jeweiligen Komponenten darstellen, ändert sich dann die Anzeige der hinsichtlich der jeweiligen Komponenten spezifische Werte in einem zugeordneten Menüpunkt. Dies ist in Figur 4 dargestellt. Durch Betätigung des Bedienelements 17, insbesondere durch Antippen, wird das Bedienfeld 12 vergrößert und gleichzeitig das Bedienelement 17 vergrößert. Im Bedienelement 17 sind nun Eingabemittel 27 dargestellt, die die relativen Abstände zwischen den einzelnen Portionen vorgeben, wobei das Bedienelement 17 gleichzeitig durch Anzeigemittel diese Abstände numerisch und graphisch visualisiert. Wiederum wurde die Größe des Übersichtsfelds reduziert, wobei die Anzeigeelemente 9, 10, 11 nach wie vor die relevanteste Information bezüglich des Betriebs der Maschine anzeigen.

In Figur 5 wurde zunächst die Anzeige im Bedienfeld 12 durch Betätigung des Bedienelements 18 umgeschaltet. Nun kann im Bedienfeld 18 mittels des Eingabemittels 28 der Abstand zwischen den Scheiben in einer Portion und die Länge der Portion eingestellt werden.

Zusätzlich wurde durch eine Ziehbewegung ausgehend vom rechten Rand des Bildschirms das Bedienfeld 13 vergrößert, das nun weitere Bedienelemente 28, 29, 30 mit Anzeigebereichen und Eingabemitteln umfasst. Entsprechend wird das Übersichtsfeld 8 durch die gleichzeitige Vergrößerung der Bedienfelder 12 und 13 in seiner Größe verändert. Die Anzeigeelemente 9, 10, 11 behalten im Wesentlichen ihre relative Anordnung, wobei sie in ihrer Größe und Form leicht verkleinert bzw. verändert werden. Um dennoch die darin dargestellte Information übersichtlich zu halten, wird der Informationsgehalt wenigstens für die Anzeigeelemente 9 und 10 leicht reduziert, bspw. durch ein teilweises Ausblenden der Information bzw. durch eine Vereinfachung der graphischen Darstellung.

Insbesondere können in dem Bedienfeld 13 Informationen bezüglich Komponenten der Lebensmittelaufschneidevorrichtung dargestellt werden und ein Monitoring, Verwalten, Konfigurieren und Erstellen dieser Komponenten ermöglicht werden. Die Komponenten umfassen insbesondere die Möglichkeit, Einstellungen der Teilverwaltung, Neueinrichtungen, Benutzerverwaltung vorzunehmen, einen Rezepteditor oder Kompositionsdesigner auszuführen, oder Anleitungen, Hilfe- und Internetseiten abzurufen. Alternativ kann der Inhalt des Bedienfelds 13 auch mit dem Inhalt des Bedienfelds 14 vertauscht werden, sodass das Bedienfeld 14 die entsprechenden Informationen einblendet. Andernfalls ist das Bedienfeld 14 insbesondere als eine Steuerung für Grundfunktionen der Lebensmittelaufschneidevorrichtung vorgesehen. Weiterhin kann ein Assistent vorgesehen sein, der die Einrichtung von Parametersätzen und das erfindungsgemäße Zusammenstellen einer gut zum Produktionsablauf und zur Hierarchieebene des Benutzers passenden Anzeige vereinfacht.

Obwohl die einzelnen Bedienfelder ein- und ausgeblendet werden können, bzw. in ihrer Größe verändert werden können, bleibt das Übersichtsfeld 8 erhalten, wobei der Benutzer intuitiv die dargestellte Information in dem Übersichtsfeld 8 wahrnimmt. Unabhängig von der Größe oder Art der Darstellung ist der Benutzer somit mit den dargestellten Parametern vertraut, und sieht sofort Veränderungen, die bezüglich der Maschinenleistung oder Betriebssicherheit relevant sein könnten. Deswegen werden die relevantesten Informationen der Maschine im Übersichtsfeld 8, bzw. in den darin angeordneten Anzeigeelementen 9, 10, 11 angezeigt. Damit wird eine intuitive und informationshaltige Darstellung ermöglicht. Sowohl die vorhandenen Anzeigeelemente 9, 10, 11 als auch die vorhandenen Bedienelemente verändern in Abhängigkeit der Größe und/oder Form ihrer Übersichtsfelder oder Bedienfelder ihre Größe, Form und/oder Position der in ihrem Inneren angezeigten Information, oder ihre relative Anordnung. Im Grundzustand wird zunächst fast die ganze Anzeige einnehmend das Übersichtsfeld 8 mit mehreren Anzeigeelementen 9, 10, 11 angezeigt. Wenn durch die zusätzlichen Bedienelemente 16, 17, 18 oder durch den Bedienknopf 19 der Inhalt oder die Größe des Übersichtsfelds 8 angepasst wird, verändern sich die darin angeordneten Anzeigeelemente 9, 10, 11 in ihrer Größe, Form, Anordnung und Inhalt, sodass diese den für sie verbleibenden Platz optimal einnehmen können. Der Zieh- oder Schiebeweg des virtuellen Bedienknopfs 19 steht für inhaltliche Tiefe der im Übersichtsfeld 8 und im Bedienfeld 21 dargestellten Informationen bezüglich der Lebensmittelaufschneidevorrichtung und/oder des Produkts.

Die durchgehende Darstellung des Übersichtsfelds 8 ermöglicht eine ständige Kontrolle des Endprodukts der Lebensmittelaufschneidevorrichtung sowie der kritischen Parameter der Lebensmittelaufschneidevorrichtung. Somit kann der Herstellprozess beständig überwacht werden. Dies kann mit dem Bezug auf die ganze Lebensmittelverarbeitungslinie erfolgen. Es werden bei einer guten Übersichtlichkeit und durchgängigen Überwachungsmöglichkeit dennoch ein einfacher Eingriff und eine einfache Bedienung der Lebensmittelaufschneidevorrichtung durch Veränderung der Produkte und/oder Maschinenparameter möglich. Die Bedienfelder und das Übersichtsfeld ermöglichen somit eine vorteilhafte Kombination aus Bedienung und Überwachung der Maschine.

Insbesondere steht die Anzeige 7 der Lebensmittelaufschneidevorrichtung in Verbindung mit einer Parameterdatenbank und einem Historien- und Betriebsdatenspeicher, so wie mit einer Maschinensteuerung, die die einzelnen Stellglieder und -antriebe der Lebensmittelaufschneidevorrichtung oder der ihr vor- oder nachgelagerten Vorrichtungen ansteuert.

## Patentansprüche

1. Lebensmittelaufschneidevorrichtung (1) mit einer Betätigungsvorrichtung und einer Anzeige (7), wobei die Anzeige (7) ausgelegt ist, in einem Anzeigemodus ein Übersichtsfeld (8) mit wenigstens zwei Anzeigeelementen (9, 10, 11) anzuzeigen,
wobei die Anzeige (7) ausgelegt ist, nach einer entsprechenden Betätigung der Betätigungsvorrichtung in einen Bedienmodus überzugehen, und in einem Bereich, der teilweise das vormalige Übersichtsfeld umfasst, ein Bedienfeld (12, 13, 14, 21) mit wenigstens einem Bedienelement (15, 16, 17, 18, 22, 23, 24, 25) anzuzeigen, wobei die Anzeige (7) ausgelegt ist, dass die Anzeigeelemente (9, 10, 11) Statusparameter der Lebensmittelaufschneidevorrichtung (1) wiedergeben, auf die wenigstens teilweise mittels des wenigstens einen Bedienelements (15, 16, 17, 18) Einfluss genommen werden kann, und
dass sich das Übersichtsfeld (8) beim Übergang in den Bedienmodus entsprechend verkleinert, und dass die wenigstens zwei Anzeigeelemente (9, 10, 11) in ihrer Größe, Form und/oder relativen Anordnung an die aktuelle Größe und/oder Form des Übersichtsfelds (8) angepasst werden.

2. Lebensmittelaufschneidevorrichtung nach Anspruch 1, wobei die Betätigungsvorrichtung durch die Anzeige (7) gebildet wird, die berührungsempfindlich gestaltet ist.

3. Lebensmittelaufschneidevorrichtung nach einem der vorangehenden Ansprüche, wobei die Anzeige (7) ausgelegt ist, dass die Größe des Bedienfelds (12, 13, 14, 21) graduell oder kontinuierlich verstellbar ist, und die Größe des Übersichtsfelds (8) sich graduell oder kontinuierlich anpasst.

4. Lebensmittelaufschneidevorrichtung nach einem der vorangehenden Ansprüche, wobei die Anzeige (7) ausgelegt ist, dass in dem Bedienfeld (21) mehrere Bedienelemente (22, 23, 24, 25) vorgesehen sind, die ihre Größe, Form und/oder relative Anordnung an die aktuelle Größe des Bedienfelds anpassen.

5. Lebensmittelaufschneidevorrichtung nach einem der vorangehenden Ansprüche, wobei die Anzeige (7) ausgelegt ist, dass mehrere Bedienfelder (12, 13, 14, 21) vorgesehen sind, die alternativ oder gleichzeitig, graduell oder kontinuierlich in ihrer Größe veränderbar sind, und dass das Übersichtsfeld (8) den nicht von den Bedienfeldern (12, 13, 14, 21) belegten Bereich der Anzeige (7) einnimmt.

6. Lebensmittelaufschneidevorrichtung nach einem der vorangehenden Ansprüche, wobei wenigstens ein Bedienelement (15, 16, 17, 18, 22, 23, 24, 25) in einer Konfiguration des Bedienfeldes (12, 13, 14, 21) einen Bedienbereich mit wenigstens einem Eingabemittel (27) zur Bedienung der Lebensmittelaufschneidevorrichtung bereitstellt.

7. Lebensmittelaufschneidevorrichtung nach einem der vorangehenden Ansprüche, wobei wenigstens ein Bedienelement (15, 16, 17, 18, 22, 23, 24, 25) einen Anzeigebereich (26) zur Anzeige von Informationen umfasst.

8. Lebensmittelaufschneidevorrichtung nach einem der vorangehenden Ansprüche, wobei die Anzahl der Bedienelemente (15, 16, 17, 18, 22, 23, 24, 25) in Abhängigkeit der Größe und/oder Form ihres zugeordneten Bedienfeldes (12, 13, 14, 21) variiert.

9. Verfahren zum Betrieb einer Lebensmittelaufschneidevorrichtung mit einer mittels Berührung bedienbaren Anzeige (7), mit den Schritten:
- Anzeigen eines Übersichtsfeldes (8) mit wenigstens zwei Anzeigeelementen (9, 10, 11), wobei die Anzeigeelemente (9, 10, 11) Statusparameter der Lebensmittelaufschneidevorrichtung (1) wiedergeben, auf die wenigstens teilweise mittels wenigstens einem Bedienelement (15, 16, 17, 18) Einfluss genommen werden kann.
- Betätigen der berührungssensitiven Anzeige (7), sodass die Anzeige (7) in einem Bereich, der teilweise das vormalige Übersichtsfeld (8) umfasst, ein Bedienfeld (12, 13, 14, 21) mit dem wenigstens einen Bedienelement (15, 16, 17, 18, 22, 23, 24, 25) anzeigt, und
- entsprechendes Verkleinern des Übersichtsfeldes (8), so dass die wenigstens zwei Anzeigeelemente (9, 10, 11) in ihrer Größe, Form und/oder relativen Anordnung an die aktuelle Größe und/oder Form des Übersichtsfelds (8) angepasst werden.

10. Verfahren nach Anspruch 9, wobei das wenigstens eine Bedienfeld (12, 13, 14, 21) mittels einer Ziehbewegung durch den Benutzer auf der Anzeige (7) graduell oder kontinuierlich vergrößerbar und verkleinerbar ist, und wobei der Umfang der Information und/oder Bedienelemente sich wahlweise vergrößert oder verkleinert, indem je nach Größe des Bedienfeldes (12, 13, 14, 21) die Bedienelemente (15, 16, 17, 18, 22, 23, 24, 25) gemäß ihrer Relevanz eingeblendet oder detailliert werden.

11. Verfahren nach Anspruch 9 oder 10, wobei durch Ziehbewegungen, Antippen oder Klicken ausgehend von den jeweiligen Rändern der Anzeige (7), jeweils den jeweiligen Rändern zugeordnete Bedienfelder (12, 13, 14, 21) vergrößerbar und/oder in den Vorder- oder Hintergrund holbar sind.

12. Verfahren nach einem der Ansprüche 9 bis 11, wobei die Anzahl der Anzeigeelemente (9, 10, 11) im Übersichtsfeld (8) durch eine Ziehbewegung des Benutzers im Übersichtsfeld (8) erhöhbar ist, und wobei sich die vor der Ziehbewegung dargestellten Anzeigeelemente (9, 10, 11) in ihrer Größe, Form und/oder relativen Anordnung verändern, um bei gleichbleibender Größe des Übersichtsfelds (8) eine Anzeige der zusätzlichen Anzeigeelemente zu ermöglichen.

13. Verfahren nach einem der Ansprüche 9 bis 12, wobei ein graphisches Element, insbesondere ein virtueller Bedienknopf (19), auf der Anzeige (7) mit der Ziehbewegung mitgeführt wird.

14. Verfahren nach einem der Ansprüche 9 bis 13, wobei auf dem wenigstens einen Bedienelement (15, 16, 17, 18, 22, 23, 24, 25) Bedienparameter angezeigt werden, die durch den Benutzer verstellt werden können, wobei eine Verstellung eines Bedienparameters eine Verstellung mehrerer Maschinenstellgrößen bewirkt.

## Claims

1. Slicer (1) having an actuating device and a display (7), wherein the display (7) is designed to display, in a display mode, an overview field (8) having at least two display elements (9, 10, 11),
wherein the display (7) is designed to pass into an operating mode after a corresponding actuation of the actuating device, and in an area which partially comprises the former overview field, to display a control panel (12, 13, 14, 21) with at least one control element (15, 16, 17, 18, 22, 23, 24, 25),
wherein the display (7) is designed in such a way that the display elements (9, 10, 11) represent status parameters of the slicer (1) on which at least partial influence can be exerted by using the at least one control element (15, 16, 17, 18), and
that the overview field (8) is correspondingly reduced in size on transition to the operating mode, and that the at least two display elements (9, 10, 11) are adapted in their size, shape and/or relative arrangement to the current size and/or shape of the overview field (8).

2. Slicer according to claim 1, wherein the actuating device is formed by the display (7), which is designed to be touch-sensitive.

3. Slicer according to one of the preceding claims, wherein the display (7) is designed such that the size of the control panel (12, 13, 14, 21) is gradually or continuously adjustable, and the size of the overview field (8) adapts gradually or continuously.

4. Slicer according to one of the preceding claims, wherein the display (7) is designed such that a plurality of control elements (22, 23, 24, 25) are provided in the control panel (21), which adjust their size, shape and/or relative arrangement to the current size of the control panel.

5. Slicer according to one of the preceding claims, wherein the display (7) is designed such that a plurality of control panels (12, 13, 14, 21) are provided which can be alternatively or simultaneously, gradually or continuously changed in their size, and that the overview field (8) occupies the area of the display (7) not occupied by the control panels (12, 13, 14, 21).

6. Slicer according to one of the preceding claims, wherein at least one control element (15, 16, 17, 18, 22, 23, 24, 25) in a configuration of the control panel (12, 13, 14, 21) provides a control area with at least one input device (27) for operating the slicer.

7. Slicer according to one of the preceding claims, wherein at least one control element (15, 16, 17, 18, 22, 23, 24, 25) comprises a display area (26) for displaying information.

8. Slicer according to one of the preceding claims, wherein the number of control elements (15, 16, 17, 18, 22, 23, 24, 25) varies depending on the size and/or shape of their associated control panel (12, 13, 14, 21).

9. Method for operating a slicer with a display (7) which can be operated by touch, comprising the steps:
- displaying an overview field (8) with at least two display elements (9, 10, 11), wherein the display elements (9, 10, 11) represent status parameters of the slicer (1) on which at least partial influence can be exerted by using the at least one control element (15, 16, 17, 18),
- actuating the touch-sensitive display (7) so that the display (7) in an area partially comprising the former overview field (8) displays a control panel (12, 13, 14, 21) having the at least one control element (15, 16, 17, 18, 22, 23, 24, 25); and
- correspondingly reducing the overview field (8) in size so that the at least two display elements (9, 10, 11) are adapted in their size, shape and/or relative arrangement to the current size and/or shape of the overview field (8).

10. Method according to claim 9, wherein the at least one control panel (12, 13, 14, 21) can be gradually or continuously enlarged and reduced in size by a pulling movement by the user on the display (7), and wherein the extent of the information and/or control elements is selectively enlarged or reduced in that depending on the size of the control panel (12, 13, 14, 21) the control elements (15, 16, 17, 18, 22, 23, 24, 25) are shown or detailed according to their relevance.

11. Method according to claim 9 or 10, wherein control panels (12, 13, 14, 21) respectively assigned to the respective edges can be enlarged and/or brought into the foreground or background by pulling movements, touching or clicking starting from the respective edges of the display (7).

12. Method according to one of claims 9 to 11, wherein the number of display elements (9, 10, 11) in the overview field (8) can be increased by a pulling movement by the user in the overview field (8), and wherein the display elements (9, 10, 11) represented before the pulling movement change in their size, shape and/or relative arrangement in order to enable a display of the additional display elements with a constant size of the overview field (8).

13. Method according to one of claims 9 to 12, wherein a graphic element, in particular a virtual control knob (19), is carried along on the display (7) with the pulling movement.

14. Method according to one of claims 9 to 13, wherein on the at least one control element (15, 16, 17, 18, 22, 23, 24, 25) control parameters are displayed which can be adjusted by the user, wherein an adjustment of a control parameter effects an adjustment of several machine control variables.

## Revendications

1. Trancheuse de produits alimentaires (1) comprenant un dispositif d'actionnement et un écran de visualisation (7), trancheuse
dans laquelle l'écran de visualisation (7) est configuré pour, dans un mode de visualisation, afficher un champ d'aperçu général (8) avec au moins deux éléments de visualisation (9, 10, 11),
dans laquelle l'écran de visualisation (7) est configuré pour, après un actionnement approprié du dispositif d'actionnement, basculer dans un mode de commande, et afficher dans une zone, qui comprend partiellement le champ d'aperçu général précédemment affiché, un champ de commande (12, 13, 14, 21) avec au moins un élément de commande (15, 16, 17, 18, 22, 23, 24, 25),
dans laquelle l'écran de visualisation (7) est configuré de manière telle,
que les éléments de visualisation (9, 10, 11) reproduisent des paramètres de statut de la trancheuse de produits alimentaires (1), sur lesquels il est possible d'influer, au moins partiellement, au moyen dudit au moins un élément de commande (15, 16, 17, 18), et
que le champ d'aperçu général (8), lors du passage au mode de commande, se réduise de manière correspondante, et
que lesdits au moins deux éléments de visualisation (9, 10, 11) soient adaptés, quant à leur grandeur, forme et/ou disposition relative, à la grandeur et/ou la forme actuelle du champ d'aperçu général (8).

2. Trancheuse de produits alimentaires selon la revendication 1, dans laquelle le dispositif d'actionnement est formé par l'écran de visualisation (7), qui est de configuration sensible au toucher, à savoir tactile.

3. Trancheuse de produits alimentaires selon l'une des revendications précédentes, dans laquelle l'écran de visualisation (7) est configuré de manière telle, que la grandeur du champ de commande (12, 13, 14, 21) soit réglable de façon graduelle ou continue, et que la grandeur du champ d'aperçu général (8) s'y adapte de façon graduelle ou continue.

4. Trancheuse de produits alimentaires selon l'une des revendications précédentes, dans laquelle l'écran de visualisation (7) est configuré de manière telle, que dans le champ de commande (21) soient prévus plusieurs éléments de commande (22, 23, 24, 25), qui adaptent leur grandeur, forme et/ou disposition relative à la grandeur actuelle du champ de commande.

5. Trancheuse de produits alimentaires selon l'une des revendications précédentes, dans laquelle l'écran de visualisation (7) est configuré de manière telle, que soient prévus plusieurs champs de commande (12, 13, 14, 21), qui peuvent être modifiés de façon alternée ou simultanée, de façon graduelle ou continue, et que le champ d'aperçu général (8) occupe la zone de l'écran de visualisation (7), qui n'est pas couverte par les champs de commande (12, 13, 14, 21).

6. Trancheuse de produits alimentaires selon l'une des revendications précédentes, dans laquelle au moins un élément de commande (15, 16, 17, 18, 22, 23, 24, 25) fournit, dans une configuration du champ de commande (12, 13, 14, 21), une zone de commande avec au moins un moyen de saisie (27) pour commander la trancheuse de produits alimentaires.

7. Trancheuse de produits alimentaires selon l'une des revendications précédentes, dans laquelle au moins un élément de commande (15, 16, 17, 18, 22, 23, 24, 25) comprend une zone de visualisation (26) pour l'affichage d'informations.

8. Trancheuse de produits alimentaires selon l'une des revendications précédentes, dans laquelle le nombre des éléments de commande (15, 16, 17, 18, 22, 23, 24, 25) varie en fonction de la grandeur et/ou de la forme du champ de commande (12, 13, 14, 21), qui leur est associé.

9. Procédé pour assurer le fonctionnement d'une trancheuse de produits alimentaires à l'aide d'un écran de visualisation (7) pouvant être commandé de manière tactile, le procédé comprenant les étapes suivantes :
- l'affichage d'un champ d'aperçu général (8) à l'aide d'au moins deux éléments de visualisation (9, 10, 11), les éléments de visualisation (9, 10, 11) reproduisant des paramètres de statut de la trancheuse de produits alimentaires (1), sur lesquels il est possible d'influer au moins partiellement au moyen d'au moins un élément de commande (15, 16, 17, 18),
- l'actionnement de l'écran de visualisation (7) sensible au toucher, à savoir tactile, de manière telle, que l'écran de visualisation (7) affiche, dans une zone, qui comprend partiellement le champ d'aperçu général (8) précédemment affiché, un champ de commande (12, 13, 14, 21) avec ledit au moins un élément de commande (15, 16, 17, 18, 22, 23, 24, 25), et
- la réduction correspondante du champ d'aperçu général (8), de manière telle, que lesdits au moins deux éléments de visualisation (9, 10, 11) soient adaptés, quant à leur grandeur, forme et/ou disposition relative, à la grandeur et/ou la forme actuelle du champ d'aperçu général (8).

10. Procédé selon la revendication 9, d'après lequel ledit au moins un champ de commande (12, 13, 14, 21) peut être agrandi et réduit de manière graduelle ou continue par l'utilisateur sur l'écran de visualisation (7), au moyen d'un mouvement de glissement, et d'après lequel l'ampleur de l'information et/ou des éléments de commande s'agrandit ou se réduit sélectivement, grâce au fait que, suivant la grandeur du champ de commande (12, 13, 14, 21), les éléments de commande (15, 16, 17, 18, 22, 23, 24, 25) soient affichés ou détaillés suivant leur importance.

11. Procédé selon la revendication 9 ou la revendication 10, d'après lequel par des mouvements de glissement, des appuis sur des touches ou des clics, à partir des bords respectifs de l'écran de visualisation (7), il est possible d'agrandir et/ou d'amener au premier-plan ou en arrière-plan des champs de commande (12, 13, 14, 21) respectivement associés aux dits bords considérés.

12. Procédé selon l'une des revendications 9 à 11, d'après lequel le nombre des éléments de visualisation (9, 10, 11) dans le champ d'aperçu général (8) peut être augmenté par un mouvement de glissement de l'utilisateur dans le champ d'aperçu général (8), et d'après lequel les éléments de visualisation (9, 10, 11) représentés avant le mouvement de glissement s'adaptent quant à leur grandeur, forme et/ou disposition relative, en vue de permettre, pour un champ d'aperçu général (8) de grandeur restant identique, un affichage des éléments de visualisation supplémentaires.

13. Procédé selon l'une des revendications 9 à 12, d'après lequel un élément graphique, notamment un bouton de commande virtuel (19) sur l'écran de visualisation (7), est entrainé en déplacement avec le mouvement de glissement.

14. Procédé selon l'une des revendications 9 à 13, d'après lequel sur ledit au moins un élément de commande (15, 16, 17, 18, 22, 23, 24, 25) sont affichés des paramètres de commande, qui peuvent être modifiés par l'utilisateur, une modification d'un paramètre de commande produisant une modification de plusieurs grandeurs de réglage de la machine.
